(19) Europäisches Patentamt
European Patent Office
Office européen des brevets

(11) EP 0 457 228 B1

(12) **EUROPÄISCHE PATENTSCHRIFT**

(45) Veröffentlichungstag und Bekanntmachung des Hinweises auf die Patenterteilung:
**27.12.1996 Patentblatt 1996/52**

(51) Int Cl.[6]: **C08L 71/12**, C08K 5/00
// (C08K5/00, 5:353, 5:42),
(C08K5/00, 5:353, 5:42, 5:13)

(21) Anmeldenummer: **91107691.7**

(22) Anmeldetag: **13.05.1991**

(54) **Antistatisch ausgerüstete, lichtstabile Polyphenylenether-Formmasse**

Antistatically equipped and photostable polyphenylene ether moulding composition

Masse à mouler à base de polyéther de phénylène, antistatique et stable à la lumière

(84) Benannte Vertragsstaaten:
**AT BE CH DE ES FR GB IT LI NL**

(30) Priorität: **16.05.1990 DE 4015740**

(43) Veröffentlichungstag der Anmeldung:
**21.11.1991 Patentblatt 1991/47**

(73) Patentinhaber: **HOECHST AKTIENGESELLSCHAFT**
**65926 Frankfurt am Main (DE)**

(72) Erfinder:
- **Bergner, Klaus-Dieter**
  **W-8901 Biberach (DE)**
- **Pfahler, Gerhard, Dr.**
  **W-8900 Augsburg (DE)**

(56) Entgegenhaltungen:
**EP-A- 0 149 454**
**EP-A- 0 224 701**
**EP-B- 208 263**
**CH-A- 5 648 036**
**DE-A- 4 024 415**
**DE-A-13 149 453**
**US-A- 4 141 883**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 457 228 B1

Printed by Jouve, 75001 PARIS (FR)

## Beschreibung

Die Erfindung bezieht sich auf eine Polyphenylenether-Formmasse, welche antistatisch ausgerüstet ist und sich durch eine erhöhte UV-Lichtstabilität auszeichnet.

Polyphenylenether-Formmassen und -Blends sind Hochleistungspolymere mit hoher Schmelzviskosität und hohem Erweichungspunkt. Sie werden bevorzugt für Anwendungen mit hohen Anforderungen an die Temperaturbeständigkeit eingesetzt und unter anderem zu Folien, Fasern und Spritzgußartikeln verarbeitet.

Polyphenylenether-Formmassen neigen bei den zur Verarbeitung notwendigen Temperaturen und, nach der Verarbeitung zu Formteilen, durch andauernde Einwirkung von UV-Licht zu einer fortschreitenden Verfärbung. Zur Verbesserung der Farbstabilität werden den genannten polymeren Formmassen im Bedarfsfall stabilisierende Additive zugegeben. Es sind Polymerblends aus Polyphenylenether-Formmassen und gummimodifizierten, schlagzähen Polystyrol-Formmassen bekannt, die durch den Zusatz eines lichtabsorbierenden Compounds aus Hydroxybenztriazolen, Hydroxybenzophenon, substituierten Derivaten dieser Verbindungen in Kombination mit einem organischen Nickelcompound in der Stabilität gegen UV-Licht verbessert sind (vgl. US 3,925,509).

Weiterhin sind thermoplastische Formmassen aus Polyphenylenetherharzen und 2,2,6,6-Tetramethyl-piperidinylderivaten als UV-Stabilisator bekannt (vgl. WO-A-8,102,021). Bekannt ist auch, daß Polymere wie Polyphenylenether gegen den schädigenden Einfluß von Licht mit 2,2,6,6-Tetramethyl-piperidinyl-derivaten und wahlweise mit UV-Stabilisatoren wie 2-Hydroxybenzophenon stabilisiert werden können (vgl. US 4,141,883).

Bekannt ist die stabilisierende Wirkung sowie die synergistische Wirkungssteigerung einer Kombination von bestimmten Ortho-hydroxy-substituierten Alkoxybenzophenonen und bestimmten aliphatischen Tetraalkyl-dipiperidinyldiestern sowie die damit ausgerüsteten Formmassen (vgl. EP 146 878). Mit einer Kombination dieser Substanzen ausgerüstete Formteile aus Polyphenylenether-Formmassen und -Blends zeigen eine starke Abnahme in ihrer Tendenz, unter UV-Licht-Einwirkung zu verfärben.

Eine Vielzahl von Anwendungsgebieten für Polyphenylenether-Formmassen und -Blends verlangen eine Stabilisierung gegen UV-Licht und somit die Zugabe lichtstabilisierender Additive. Dadurch dürfen aber andere, wichtige Eigenschaften der thermoplastischen Formmassen nicht beeinträchtigt werden.

Beschrieben ist der Einsatz von Antistatika der Struktur $R-SO_3X$, wobei R ein Alkyl oder Aralkyl mit 5 bis 25 Kohlenstoffatomen und X ein Alkalimetall ist, zur Verbesserung des antistatischen Charakters einer Polyphenylenether-Formmasse oder eines -Blends aus Polyphenylenether und Styrol-Polymer, wie er unter anderem zur Herstellung von Gehäusen für elektronische Geräte eingesetzt wird (vgl. US 4,551,494).

Es hat sich gezeigt, daß bei der Herstellung antistatisch ausgerüsteter, gegen UV-Licht stabilisierter Formteile aus Polyphenylenether-Formmassen und -Blends aus Polyphenylenether und unmodifiziertem oder gummimodifiziertem, schlagzähem Polystyrol bei gemeinsamen Einsatz von Antistatika der Struktur $R-SO_3X$ und UV-Stabilisatoren aus der Gruppe aliphatischer Tetraalkyl-dipiperidinyl-diester gegenseitige, unerwünschte Wirkungsstörungen auftreten. Ergebnis dieser Interaktion sind nicht unerhebliche Einbußen in der UV-Stabilität.

Überraschend wurde nun gefunden, daß es gelingt, antistatisch ausgerüstete Polyphenylenether-Formmassen und -Blends mit ausgezeichneter UV-Stabilität und guten antistatischen Eigenschaften herzustellen, indem eine Mischung von ein oder mehr Verbindungen der Struktur $R-SO_3X$ und mindestens einem HALS-Stabilisator allein oder in Verbindung mit mindestens einem o-Hydroxy-alkoxybenzophenor verwendet wird.

Die Erfindung betrifft somit eine Polyphenylenether-Formmasse, im wesentlichen bestehend aus einem Polymer, welche Einheiten der Formel I

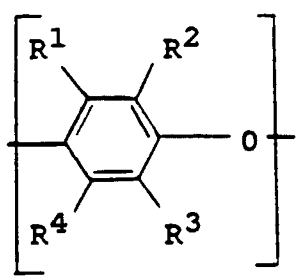

(I),

worin $R^1$, $R^2$, $R^3$ und $R^4$ gleich oder verschieden sind und ein Wasserstoffatom, ein Halogenatom, einen geradkettigen oder verzweigten $C_1$-$C_4$-Alkylrest, Phenyl oder Benzyl bedeuten, enthält, und einem Antistatikum, dadurch gekennzeichnet, daß die Formmasse 0,05 bis 5 Gew.%-Teile, bezogen auf das Polymer, mindestens einer Verbindung der Formel II

$$R^5\text{-}[(SO_3)_mM]_n \qquad (II),$$

worin

- $R^5$ einen geradkettigen oder verzweigten, aliphatischen Kohlenwasserstoffrest mit 4 bis 30 C-Atomen oder cycloaliphatischen Kohlenwasserstoffrest mit 6 bis 30 C-Atomen,
- M ein Alkali- oder Erdalkaliatom,
- m 1 oder 2 und
- n 1,2,3 oder 4 bedeuten, wobei jede Sulfonatgruppe mittelständig oder endständig sein kann,

und

0,05 bis 2,0 Gew.-Teile, bezogen auf das Polymer, mindestens einer Verbindung der Formel III

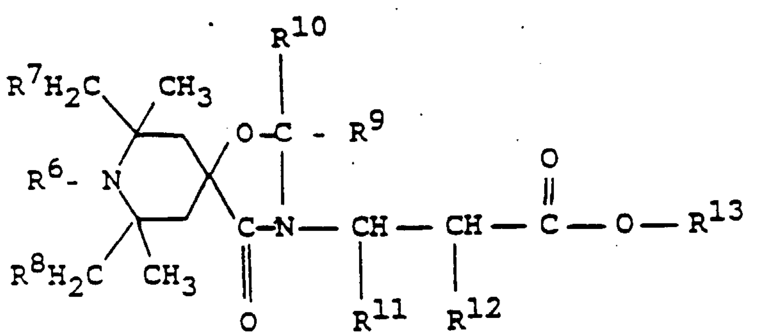

(III)

worin

- $R^6$ ein Wasserstoffatom, eine $C_1$-$C_8$-Alkylgruppe, eine $C_1$-$C_{18}$-Alkoxygruppe oder eine Acyl- oder Hydroxylgruppe,
- $R^7$ und $R^8$ unabhängig voneinander ein Wasserstoffatom oder eine $C_1$-$C_4$-Alkylgruppe,
- $R^9$ ein Wasserstoffatom, eine $C_1$-$C_{30}$-Alkylgruppe oder eine Benzylgruppe,
- $R^{10}$ ein Wasserstoffatom, eine $C_1$-$C_{30}$-Alkylgruppe, eine $C_1$-$C_4$-Alkyl-phenylgruppe, eine Chlorphenylgruppe, eine 4-Hydroxy-3,5-di-t-butylphenylgruppe, eine Phenyl-, eine Benzyl- oder Naphthylgruppe bedeuten, oder
- $R^9$ und $R^{10}$ zusammen mit dem C-Atom, an welches sie gebunden sind, einen gegebenenfalls durch $C_1$-$C_4$-Alkyl substituierten $C_5$-$C_{15}$-Cycloalkylidenring oder einen Rest der Formel

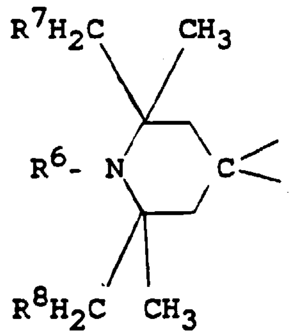

bilden, worin $R^6$, $R^7$ und $R^8$ die vorgenannte Bedeutung haben,

- $R^{11}$ ein Wasserstoffatom, eine Methylgruppe, eine Phenylgruppe oder eine Gruppe

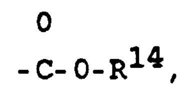

worin $R^{14}$ ein $C_1$-$C_{21}$-Alkylrest ist, und

$R^{12}$ ein Wasserstoffatom oder einen Methylrest bedeute und

$R^{13}$ ein Wasserstoffatom, eine $C_1$-$C_{30}$-Alkylgruppe, eine $C_2$-$C_{30}$-Alkylengruppe, wobei die Alkylgruppe oder die Alkylengruppe durch Phenyl oder Naphthyl substituiert und/oder durch Sauerstoff oder $C_1$-$C_4$-Alkylimin unterbrochen sein können, eine $C_5$-$C_{12}$-Cycloalkylgruppe, eine Phenylgruppe, einen $C_1$-$C_{12}$-Alkyl-phenylrest oder einen aliphatischen Kohlenwasserstoffrest mit 2-20 C-Atomen bedeutet, der durch Sauerstoff oder $C_1$-$C_4$-Alkylimin unterbrochen sein kann, und 1-3 weitere Reste der Formel

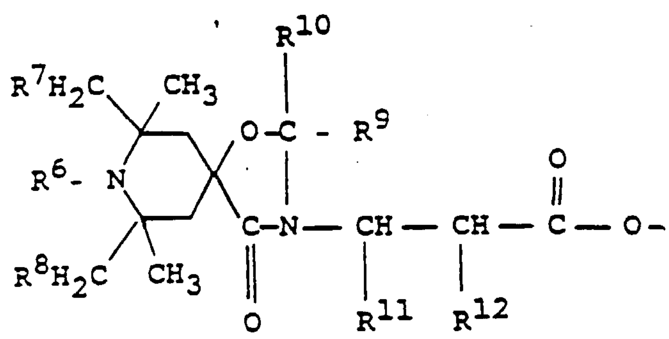

und/oder $C_1$-$C_{21}$-Alkylcarboxylgruppen trägt, wobei $R^6$, $R^7$, $R^8$, $R^9$, $R^{10}$, $R^{11}$ und $R^{12}$ die obige Bedeutung haben, enthält.

Bevorzugte Polyphenylenetherharze sind Homopolymere oder Copolymere mit Einheiten der Formel I,

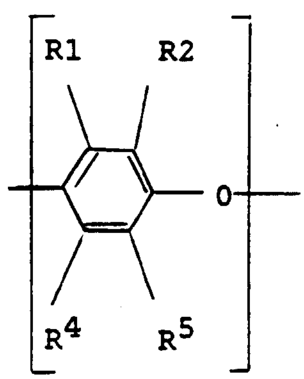

(I),

in welcher $R^1$, $R^2$, $R^3$ und $R^4$ gleich oder verschieden sind und ein Wasserstoffatom, ein Halogenatom, einen geradkettigen oder verzweigten $C_1$-$C_{20}$-Alkylrest, einen $C_1$-$C_{20}$-Alkoxyrest, Phenyl oder Benzyl bedeuten. Die Gesamtzahl der Monomereneinheiten beträgt wenigstens 20, bevorzugt wenigstens 50.

Im allgemeinen sind die Polyphenylenetherharze selbstkondensierende Produkte aus monohydrischen, monocyclischen Phenolen, hergestellt durch das Reagieren der Phenole mit Sauerstoff in Gegenwart komplexer Metall-Katalysatoren. Das Molekulargewicht wird dabei über die Reaktionszeit eingestellt, längere Reaktionszeiten führen zu einer höheren Durchschnittszahl sich wiederholender Einheiten.

Geeignete phenolische Monomere sind beispielsweise 2,6-Dimethylphenol; 2,6-Diethylphenol; 2,6-Dibutylphenol; 2,6-Dilaurylphenol; 2,6-Dipropylphenol; 2,6-Diphenylphenol; 2-Methyl-6-ethylphenol; 2-Methyl-6-cyclohexylphenol; 2-Methyl-6-tolylphenol; 2-Methyl-6-methoxyphenol; 2-Methyl-6-butylphenol; 2,6-Dimethoxyphenol; 2,3,6-Trimethylphenol; 2,3,5,6-Tetramethylphenol; und 2,6-Diethoxyphenol.

Geeignete Polymere sind beispielsweise:

Poly(2,6-dilauryl-1,4-phenylen)ether; Poly(2,6-diphenyl-1,4-phenylen)-ether; Poly(2,6-dimethoxy-1,4-phenylen)-ether; Poly(2,6-diethoxy-1,4-phenylen)ether; Poly(2-methoxy-6-ethoxy-1,4-phenylen)ether; Poly(2-ethyl-6-stearyloxy-1,4-phenylen)ether; Poly(2,6-dichloro-1,4-phenylen)ether, Poly(2-methyl-6-phenyl- 1,4-phenylen)ether; Poly(2,6-dibenzyl-1,4-phenylen)ether; Poly(2-ethoxy-1,4-phenylen)ether; Poly(2-chloro-1,4-phenylen)ether; Poly(2,6-dibrom-1,4-phenylen)ether sowie Copolymere der vorgenannten Monomeren und ihre Mischungen, beispielsweise Copolymere, die durch Reaktion von 2,6-Dimethylphenol mit anderen phenolischen Monomeren wie z.B. 2,3,6-Trimethylphenol oder 2-Methyl-6-butylphenol entstehen.

Besonders bevorzugt sind Homopolymere der oben genannten Formel, in der $R^2$ und $R^3$ eine Alkylgruppe, besonders $C_1$-$C_4$-Alkylgruppen sind, insbesondere Poly(2,6-dimethyl-1,4-phenylen)ether.

Vorzugsweise enthält die erfindungsgemäße Formmasse ein gummimodifiziertes, hochschlagfestes poly(alkenyl) aromatisches Harz.

Geeignete derartige Harze sind solche, in welchen wenigstens einige Einheiten der Formel V

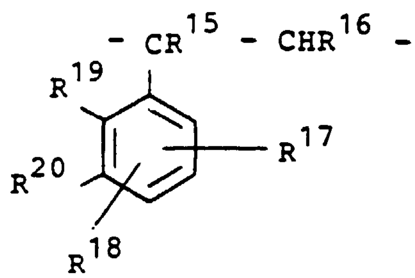

(V)

enthalten sind, worin $R^{15}$ und $R^{16}$ gleich oder verschieden sind und eine $C_1$-$C_6$-Alkylgruppe oder eine $C_2$-$C_6$-Alkenylgruppe oder ein Wasserstoffatom bedeuten, $R^{17}$ und $R^{18}$ gleich oder verschieden sind und ein Chlor-, Brom- oder Wasserstoffatom oder eine $C_1$-$C_6$-Alkylgruppe bedeuten, $R^{19}$ und $R^{20}$ gleich oder verschieden sind und ein Wasserstoffatom, eine $C_1$-$C_6$-Alkylgruppe oder eine $C_2$-$C_6$-Alkenylgruppe bedeuten, oder $R^{19}$ und $R^{20}$ über Kohlenwasserstoffbrücken miteinander verbunden sind und mit dem Ring eine Naphthylgruppe bilden.

Geeignete Harze enthalten Styrol oder dessen Homo- und Analoge. Außer Styrol können beispielsweise Alpha-Methylstyrol, p-Methylstyrol, 2,4-Dimethylstyrol, Chlorstyrol, Dichlorstyrol, Bromstyrol, Dibromstyrol, p-tert.-Butylstyrol, p-Ethylstyrol, Vinylxylol, Divinylbenzol und Vinylnaphthalin enthalten sein.

Bevorzugt sind Styrol enthaltende Harze.

Mögliche Gummimodifizierungsmittel, die in das poly(alkenyl)aromatische Harz eingemischt oder einpolymerisiert sein können, sind natürlicher Gummi, synthetischer Gummi, beispielsweise Polyisopren, Polybutadien, Polychloropren, Ethylen-Propylen-Dien-Terpolymere (EPDM), Styrol-Butadien-Copolymere (SBR), Styrol-Acrylnitril-Copolymere (SAN), Ethylen-Propylen-Copolymere (EPR), Acrylnitril-Gummi, Polyurethan-Gummi und Polyorganosiloxane (Silikon)-Gummi.

Der Anteil der schlagzähen Komponente kann sehr stark variieren. Das Gewichtsverhältnis von Polyphenylenether und gummimodifiziertem, poly(alkenyl)aromatischem Harz beträgt 5:95 bis 95:5. Im allgemeinen wird sich der Anteil an gummimodifiziertem poly(alkenyl)aromatischem Harz in einem Bereich von 5 bis 45 Gewichtsprozent bewegen, abhängig von den besonderen Anforderungen an die Schlagzähigkeit der entsprechenden Formmasse.

Die Formmasse kann weiterhin einen Weichmacher und/oder einen Schlagzähmacher in einer Einsatzmenge bis zu 30 Gew.-Teilen, bezogen auf 100 Teile der Polymercomponente, enthalten.

Beispiele für geeignete Weichmacher sind Phenylbisdodecylphosphat, Phenylbisneopentylphosphat, Phenylethylenhydrogenphosphat, Phenyl-bis-(3,5,5'-trimethylhexylphosphat), Ethyldiphenyl-phosphat, 2-Ethylhexyldi(p-tolyl) phosphat, Diphenylhydrogenphosphat, Bis(2-ethylhexyl)p-tolylphosphat, Tritolylphosphat, Bis(2-ethylhexyl)phenylphosphat, Tri(nonyl-phenyl)-phosphat Phenylmethylhydrogenphosphat, Di(dodecyl)p-tolylphosphat, Tricresylphosphat, Triphenylphosphat, Dibutylenphenylphosphat, 2-Chlorethyldiphenylphosphat, p-Tolyl-bis-(2,5,5-trimethylhexyl)phosphat, 2-Ethylhexyldiphenylphosphat und Diphenylhydrogenphosphat.

Geeignet sind ebenfalls polymere Weichmacher und hier vor allem Polystyrol-Homopolymere, die in Abhängigkeit der zu erzielenden Wirkung in einer Menge bis zu 30 Gew.-Teilen, bezogen auf das Polymer zugegeben werden können.

Die erfindungsgemäße Formmasse kann einen oder mehrere Schlagzähmacher in den herkömmlichen Einsatzmengen enthalten. Typische Vertreter sind Copolymere oder Terpolymere von alkenylaromatischen Mischungen der oben genannten Formel mit Gummi- oder elastomeren Anteilen. Bervorzugt sind lineare Block-, Propf- oder Radialteleblockpolymere oder Terpolymere von Styrol und einen hydrierten oder nicht hydrierten Dien.

Die erfindungsgemäße Formmasse enthält mindestens ein Antistatikum der Formel II

$$R^5[(SO_3)_mM]_n \quad (II),$$

worin

- $R^5$ einen geradkettigen oder verzweigten, aliphatischen Kohlenwasserstoffrest mit 4 bis 30, vorzugsweise 4 bis 20, insbesondere 10 bis 20 C-Atomen, oder cycloaliphatischen Kohlenwasserstoffrest mit 6 bis 30, vorzugsweise 6 bis 20 C-Atomen,
- M ein Alkali- oder Erdalkaliatom, vorzugsweise Natriumatom,
- m 1 oder 2, vorzugsweise 1, und
- n 1,2,3 oder 4, vorzugsweise 1 oder 2, bedeuten, wobei jede Sulfonatgruppe mittelständig oder endständig sein kann.

Das Antistatikum wird in einer Menge von 0,05-5 Gew.-Teilen, bezogen auf das Polymer, eingesetzt. Einsatzmengen kleiner als 0,05 Gew.-Teile führen im allgemeinen zu keiner ausreichenden antistatischen Ausrüstung, während Einsatzmengen über 5 Gew.-Teilen in der Regel zu keiner weiteren Steigerung der antistatischen Eigenschaften führen.

Weiterhin enthält die erfindungsgemäße Formmasse mindestens eine Verbindung der Formel III

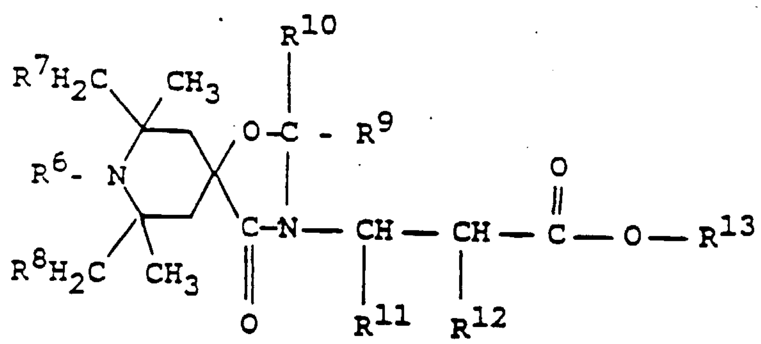

(III)

In dieser Formel ist

- $R^6$ ein Wasserstoffatom, eine $C_1$-$C_8$-Alkylgruppe, eine $C_1$-$C_{18}$-Alkoxygruppe, vorzugsweise ein Wasserstoffatom oder eine $C_1$-$C_4$-Alkylgruppe oder eine Acyl- oder Hydroxylgruppe.
- $R^7$ und $R^8$ bedeuten unabhängig voneinander ein Wasserstoffatom oder eine $C_1$-$C_4$-Alkylgruppe.
- $R^9$ ist ein Wasserstoffatom, eine $C_1$-$C_{30}$-Alkylgruppe oder eine Benzylgruppe, und
- $R^{10}$ ist ein Wasserstoffatom, eine $C_1$-$C_{30}$-Alkylgruppe, eine Benzylgruppe, eine Phenylgruppe, eine $C_1$-$C_4$-Alkylphenylgruppe, eine Chlorphenylgruppe, eine 4-Hydroxy-3,5-di-t-butylphenylgruppe oder Napththylgruppe.
- $R^9$ und $R^{10}$ können auch zusammen mit dem C-Atom, an welches sie gebunden sind, einen gegebenenfalls durch $C_1$-$C_4$-Alkyl substituierten $C_5$-$C_{15}$-Cycloalkylidenring oder einen Rest der Formel

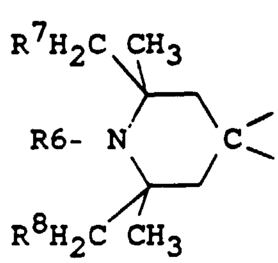

bilden, worin $R^6$, $R^7$ und $R^8$ die vorgenannte Bedeutung haben.

$R^{11}$ ist ein Wasserstoffatom, eine Methylgruppe, ein Phenylrest oder eine Gruppe

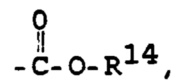

worin $R^{14}$ einen $C_1$-$C_{21}$-Alkylrest bedeutet.

$R^{12}$ bedeutet ein Wasserstoffatom oder einen Methylrest, vorzugsweise ein Wasserstoffatom.

$R^{13}$ ist ein Wasserstoffatom, eine $C_1$-$C_{30}$-Alkylgruppe, vorzugsweise $C_1$-$C_{20}$-Alkylgruppe, eine $C_2$-$C_{30}$-Alkylengruppe, vorzugsweise $C_2$-$C_{20}$-Alkylengruppe, wobei die Alkylgruppe oder die Alkylengruppe durch Phenyl oder Naphthyl substituiert und/oder durch Sauerstoff oder $C_1$-$C_4$-Alkylimin unterbrochen sein können, eine $C_5$-$C_{12}$-Cycloalkylgruppe, ein Phenylrest, ein $C_1$-$C_{12}$-Alkyl-phenylrest, oder

$R^{13}$ ist ein aliphatischer Kohlenwasserstoffrest mit 2-20 C-Atomen, der durch Sauerstoff oder $C_1$-$C_4$-Alkylimin unterbrochen sein kann und 1-3 weitere Reste der Formel

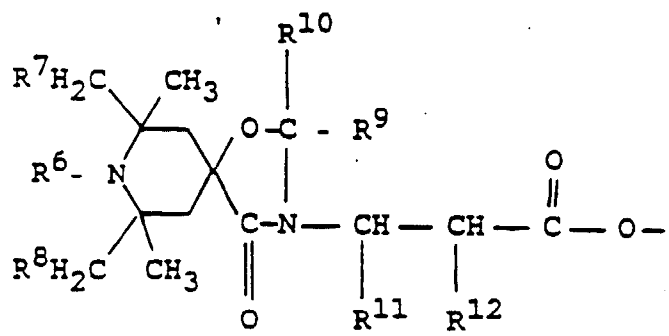

und/oder $C_1$-$C_{21}$-Alkylcarboxylgruppen trägt, wobei $R^6$, $R^7$, $R^8$, $R^9$, $R^{10}$, $R^{11}$ und $R^{12}$ die obige Bedeutung haben. Vorzugsweise ist $R^{13}$ eine $C_2$-$C_{20}$-Alkylgruppe.

Die Verbindung der Formel III wird in einer Menge von 0,05 bis 2,0, bevorzugt 0,05 bis 1,0 Gew.-Teilen, bezogen auf das Polymer, zugesetzt.

Zur weiteren Erhöhung der Lichtstabilität kann die erfindungsgemäße Formmasse mindestens eine Verbindung der Formel IV enthalten.

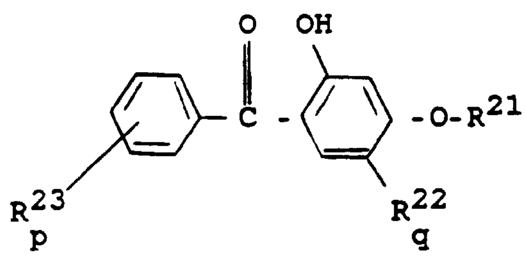

(IV)

In dieser Formel bedeuten

| | |
|---|---|
| $R^{21}$ | ein Wasserstoffatom, eine $C_1$-$C_{25}$-Alkylgruppe oder eine $C_6$-$C_{10}$-Arylgruppe, |
| $R^{22}$ und $R^{23}$ | unabhängig voneinander ein Wasserstoffatom, ein Hydroxylgruppe, eine $C_1$-$C_{10}$- Alkoxygruppe, eine $C_1$-$C_{25}$-Alkylgruppe oder eine $C_6$-$C_{10}$-Arylqruppe. |

p und q sind unabhängig voneinander null oder eine ganze Zahl von 1 bis 5.

Die Menge der Verbindung der Formel IV in der Formmasse beträgt 0,3 bis 10, vorzugsweise 0,3 bis 5 Gew.-Teile pro

100 Teile Polymer.

Neben den erfindungsgemäß zu verwendeten Verbindungen kann die Polyphenylenether-Formmasse die üblichen Zusatzstoffe wie beispielsweise Antioxidantien, Verarbeitungsstabilisatoren, Lichtschutzmittel, Gleitmittel, Füllstoffe, Flammschutzmittel, Verarbeitungshilfsmittel, Pigmente, Färbemittel, Farbstoffe, Entformungsmittel, Fließverbesserer oder Geruchsunterdrücker, enthalten.

Die erfindungsgemäße Polyphenylenether-Formmasse kann nach allen für Polyphenylenether bekannten Verfahren zu Kunststoffartikeln verarbeitet werden. Genannt sei beispielsweise die Einarbeitung eines Dryblends oder einer Lösung von Zusatzstoffen in die Polyphenylenether-Formmasse durch Extrusion bei einer Temperatur von 230 bis 350°C, das anschließende Abkühlen und Zerkleinern des Extrudats sowie die Verarbeitung des entstandenen Granulats zu Spritzgußartikeln bei der vorgenannten Temperatur.

Die erfindungsgemäße Polyphenylenether-Formmasse kann in allen Anwendungen eingesetzt werden, für die der Einsatz von Polyphenylenether-Formmassen und -Blends bekannt ist bzw. diese Polymere Verwendung finden. Sie ist besonders für Artikel geeignet, die für den Außeneinsatz bestimmt und dabei der Sonnenstrahlung ausgesetzt sind, sowie für Artikel im Inneneinsatz, welche starkem künstlichen Licht ausgesetzt sind. Ferner in Artikeln, die neben ihrer UV-Stabilität eine antistatische Ausrüstung aufweisen müssen, wie beispielsweise Gehäuse elektronischer Bauteile und Geräte.

**Beispiele 1 und 2**

Eine Grundmischung aus

50,0 Gew.-Teilen Poly(2,6-dimethyl-1,4-phenylen)ether
50,0 Gew.-Teilen eines mit Polybutadien modifizierten, hochschlagfesten Polystyrols,
1,5 Gew.-Teilen eines Polyethylens niedriger Dichte,
0,15 Gew.-Teilen Zinkoxid,
0,15 Gew.-Teilen Zinksulfid, und
0,5 Gew.-Teilen Diphenyldioctylphthalat wurde mit
2,5 Gew.-Teilen eines Antistatikums vom Typ Natriumalkansulfonat und den in Tabelle 1 angegebenen Mengen 2-Hydroxy-4-n-octoxybenzophenon und einer Verbindung der Formel III versetzt, extrudiert (Massetemperatur 260°C) und granuliert. Die Granulate wurden anschließend durch Spritzgießen (Massetemperatur 255°C, Formtemperatur 70°C) zu 1 mm dicken Platten mit den Maßen 80 x 80 mm verarbeitet. In der gleichen Weise wurden Spritzplatten mit den gleichen Maßen hergestellt, die kein Antistatikum und/oder Lichtstabilisator enthielten.

Die auf diese Weise hergestellten Prüfkörper (Spritzplatten) wurden zu einem Teil in einem Bewitterungsgerät bei einer Schwarztafeltemperatur von 45°C ± 5°C nach DIN 53387-1-A-X belichtet. Dabei wurde die Veränderung des Farbabstands ($\Delta E^{*}_{ab}$) der exponierten Fläche der Prüfkörper im Vergleich zum Ausgangszustand in verschiedenen Zeitintervallen gemessen (DIN 53236/DIN 6174). Die Normfarbwerte bei Normallichtart C wurden mittels eines Farbmeßgeräts ermittelt.

Parallel zu den Belichtungsversuchen wurde die antistatische Ausrüstung anhand des Oberflächenwiderstands $R_{0A}$ nach DIN 53482 (Elektrodenanordnung A) jeweils nach 3 tägiger Lagerung der unbelichteten Prüfkörper (1mm-Spritzplatten) im Normklima (23°C/50% rel. Luftfeuchtigkeit) ermittelt.

**Tabelle 1: Veränderung des Farbabstands $\Delta E^*_{ab}$, Oberflächenwiderstand $R_{OA}$**

| | Vergleiche | | | Beispiele | |
|---|---|---|---|---|---|
| Grundrezeptur plus | A | B | C | 1 | 2 |
| Verbindung II[1)] | - | - | 2,5 | 2,5 | 2,5 |
| Verbindung III[2)] | - | - | - | 0,2 | 0,3 |
| Verbindung IV[3)] | - | 2,0 | 2,0 | 2,0 | 2,0 |
| Verbindung [4)] | - | 0,2 | 0,2 | - | - |
| $\Delta E^*_{ab}$ (DIN 53236/6174) nach Expositionszeit | | | | | |
| 150 Std. | 4,5 | 1,2 | 2,8 | 1,4 | 1,2 |
| 300 Std. | 10,5 | 4,9 | 8,1 | 4,8 | 4,2 |
| 450 Std. | 18,3 | 10,8 | 15,9 | 10,6 | 9,4 |
| Oberflächenwiderstand (DIN 53482) $R_{OA}$ (Ω) | $10^{16}$ | $10^{16}$ | $10^{12}$ | $10^{10}$ | $10^{10}$ |

1) Natriumalkansulfonat
2) 2,2,4,4-Tetramethyl-20-(β-lauryloxy/myristyloxy-carbonylethyl)-7-oxa-3,20-diaza-21-oxo-dispiro[5.1.11.2]-heneicosan
3) 2-Hydroxy-4-n-octoxybenzophenon
4) 2,2,6,6-Tetramethyldipiperidinylsebacat

Die niedrigen Werte für $\Delta E^*_{ab}$ der erfindungsgemäßen Formmassen (Beispiel 1 und 2) im Vergleich zum Beispiel C bei gleichzeitiger guter antistatischer Ausrüstung zeigen, daß wirkungsmindernde Interaktionen zwischen der erfindungsgemäßen UV-Stabilisatormischung und dem Antistatikum (wie bei Beispiel B und C) nicht stattfinden.

Gleichzeitig wird die gute UV-stabilisierende Wirkung der erfindungsgemäßen UV-Stabilisatormischung im Vergleich zu A deutlich.

**Beispiele 3 bis 8**

Die Grundrezeptur der Beispiele 1 und 2 wurde mit den in Tabelle 2 genannten Mengen der Verbindungen II,III und IV versetzt. Die Probekörperherstellung und Prüfungsdurchführung erfolgte wie in den Beispielen 1 und 2. Die Ergebnisse sind in Tabelle 2 aufgeführt.

Tabelle 2:

| Veränderung des Farbabstands $\Delta E_{ab}$; Oberflächenwiderstand $R_{OA}$ | | | | | | | |
|---|---|---|---|---|---|---|---|
| | Vergleich | | Beispiele | | | | |
| Grundrezeptur plus | D | 3 | 4 | 5 | 6 | 7 | 8 |
| Verbindung II | 2,5 | 2,5 | 2,5 | 2,5 | 2,5 | 2,5 | 2,5 |
| Verbindung III | - | 0,2 | 0,2 | 0,5 | 1,0 | 0,3 | 0,4 |
| Verbindung IV | - | 1,5 | 1,0 | 2,0 | 2,0 | 3,0 | 4,0 |
| $\Delta E^*_{ab}$ (DIN 53236/6174) | | | | | | | |
| nach Expositionszeit | | | | | | | |
| 150 Std. | 4,9 | 1,9 | 2,1 | 1,2 | 1,0 | 1,8 | 1,1 |
| 300 Std. | 11,0 | 6,9 | 8,7 | 3,8 | 3,3 | 4,3 | 3,5 |
| 450 Std. | 20,1 | 12,2 | 13,4 | 8,5 | 7,5 | 9,5 | 7,6 |
| Oberflächenwiderstand (DIN 53482) | | | | | | | |
| $R_{OA}$ ($\Omega$) | $10^{10}$ | $10^{10}$ | $10^{10}$ | $10^{10}$ | $10^{10}$ | $10^{10}$ | $10^{10}$ |

**Beispiel 9 bis 11**

Die Grundrezeptur der Beispiele 1 und 2 erhielt zusätzlich jeweils 12,0 Gew.-Teile eines isopropylierten Triphenylphosphats als flammenhemmende Ausrüstung, und wurde mit den in Tabelle 3 genannten Mengen der Verbindungen II, III und IV versetzt. Die Probenkörperherstellung und die Durchführung der Prüfung erfolgte wie in den Beispielen 1 und 2. Die Ergebnisse sind in Tabelle 3 aufgeführt.

Tabelle 3:

| Veränderung des Farbabstands $\Delta E^*_{ab}$; Oberflächenwiderstand $R_{OA}$ | | | |
|---|---|---|---|
| | **Beispiele** | | |
| Grundrezeptur plus | 9 | 10 | 11 |
| Verbindung II | 2,5 | 2,5 | 2,5 |
| Verbindung III | 0,2 | 0,2 | 0,2 |
| Verbindung IV | | | |
| Typ a | 2,0 | - | - |
| Typ b | - | 2,0 | - |
| Typ c | - | - | 2,0 |
| $\Delta E^*_{ab}$ (DIN 53236/6174) | | | |
| nach Expositionszeit | | | |
| 150 Std. | 1,6 | 1,6 | 3,1 |
| 300 Std. | 4,1 | 4,7 | 7,6 |
| 450 Std. | 9,4 | 10,3 | 13,3 |
| Oberflächenwiderstand (DIN 53482) | | | |
| $R_{OA}$ (Ω) | $10^{11}$ | $10^{11}$ | $10^{11}$ |

**IVa 2,4-Dihydroxybenzophenon**

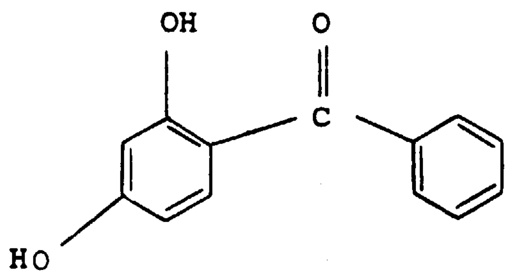

**IVb 4-Methoxy-2-Hydroxybenzophenon**

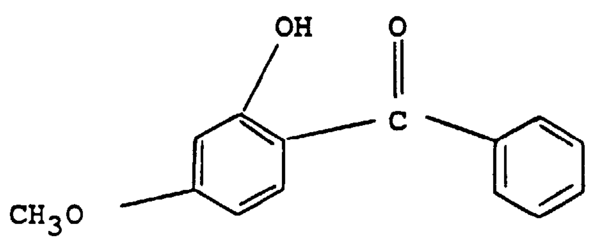

**IVc 4-Dodecyl-2-Hydroxybenzophenon**

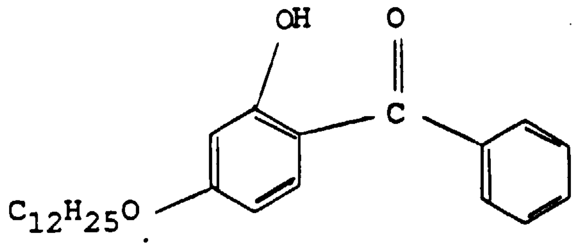

**Beispiele 12 bis 14**

Eine Mischung von

60,0 Gew.-Teilen Poly (2,6-dimethyl -1,4-phenylether)harz,
40,0 Gew.-Teilen eines mit Polybutadien modifizierten, hochschlagfesten Polystyrols,
1,5 Gew.Teilen eines Polyethylens niedriger Dichte
0,15 Gew.Teilen Zinkoxid,
0,15 Gew.-Teilen Zinksulfid,
0,5 Gew.-Teilen Diphenyldioctylphthalat wurde mit
2,5 Gew.-Teilen eines Antistatikums vom Typ Natriumalkansulfonat (II) und einer Verbindung der Formel III in den in Tabelle 4 genannten Mengen versetzt, extrudiert und zu 1 mm dicken Platten (80 x 80 mm) verarbeitet. Die Temperaturen zur Herstellung der Prüfkörper wurden der geänderten Zusammensetzung wie folgt angepaßt:
Extrusions/Massetemperatur 270°C;
Spritzguß/Massetemperatur 260°C/Formtemperatur 90°C.

Ansonsten folgte die Probekörperherstellung und die Prüfung entsprechend den Beispielen 1 und 2. Die Ergebnisse sind in Tabelle 4 aufgeführt.

Tabelle 4

| | **Vergleich** | | **Beispiele** | |
|---|---|---|---|---|
| Grundrezeptur plus | E | 12 | 13 | 14 |
| Verbindung II | 2,5 | 2,5 | 2,5 | 2,5 |
| Verbindung III | - | 0,2 | 1,0 | 2,0 |
| $\Delta E^{*}_{ab}$ (DIN 53236/6174) | | | | |
| nach Expositionszeit | | | | |
| 150 Std. | 4,7 | 2,1 | 1,4 | 1,0 |
| 300 Std. | 10,4 | 6,4 | 4,3 | 3,1 |
| 450 Std. | 22,1 | 14,3 | 10,2 | 7,6 |
| Oberflächenwiderstand (DIN 53482) | | | | |
| $R_{OA}$ ($\Omega$) | $10^{10}$ | $10^{10}$ | $10^{10}$ | $10^{10}$ |

**Patentansprüche**

1. Polyphenylenether-Formmasse, im wesentlichen bestehend aus einem Polymer, welches Einheiten der Formel 1

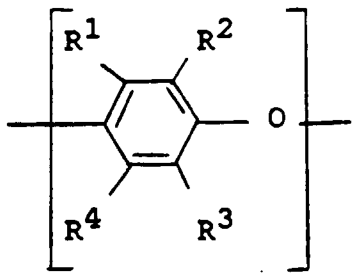

(I),

worin $R^1$, $R^2$, $R^3$ und $R^4$ gleich oder verschieden sind und ein Wasserstoffatom, ein Halogenatom, einen geradkettigen oder verzweigten $C_1$-$C_{20}$-Alkylrest, einen $C_1$-$C_{20}$-Alkoxyrest, Phenyl oder Benzyl bedeuten, enthält, und einem Antistatikum, dadurch gekennzeichnet, daß die Formmasse 0,05 bis 5 Gew.%-Teile, bezogen auf das Polymer, mindestens einer Verbindung der Formel II

$$R^5\text{-}[(SO_3)_mM]_n \qquad \text{(II)},$$

worin

- $R^5$ einen geradkettigen oder verzweigten, aliphatischen Kohlenwasserstoffrest mit 4 bis 30 C-Atomen oder cycloaliphatischen Kohlenwasserstoffrest mit 6 bis 30 C-Atomen,
- M ein Alkali- oder Erkalkaliatom,
- m 1 oder 2 und
- n 1,2,3 oder 4 bedeuten, wobei jede Sulfonatgruppe mittelständig oder endständig sein kann,

und
0,05 bis 2,0 Gew.-Teile, bezogen auf das Polymer, mindestens einer Verbindung der Formel III

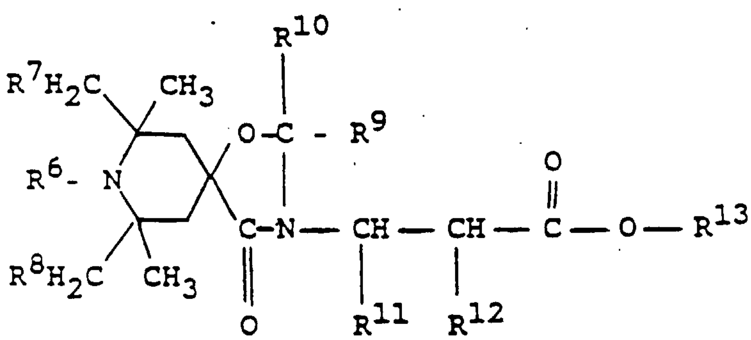

(III)

worin

- $R^6$ ein Wasserstoffatom, eine $C_1$-$C_8$-Alkylgruppe, eine $C_1$-$C_{18}$-Alkoxygruppe oder eine Acyl- oder Hydroxylgruppe,
- $R^7$ und $R^8$ unabhängig voneinander ein Wasserstoffatom oder eine $C_1$-$C_4$-Alkylgruppe,
- $R^9$ ein Wasserstoffatom, eine $C_1$-$C_{30}$-Alkylgruppe oder eine Benzylgruppe,
- $R^{10}$ ein Wasserstoffatom, eine $C_1$-$C_{30}$-Alkylqruppe, eine $C_1$-$C_4$-Alkyl-phenylgruppe, eine Chlorphenylgruppe, eine 4-Hydroxy-3,5-di-t-butylphenylgruppe, eine Benzylgruppe, eine Phenylgruppe oder Naphthylgruppe bedeuten, oder
- $R^9$ und $R^{10}$ zusammen mit dem C-Atom, an welches sie gebunden sind, einen gegebenenfalls durch $C_1$-$C_4$-Alkyl substituierten $C_5$-$C_{15}$-Cycloalkylidenring oder einen Rest der Formel

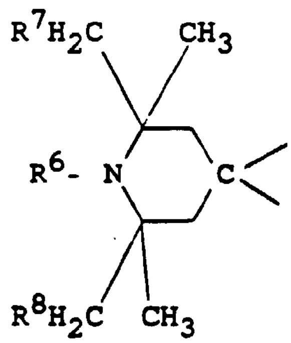

bilden, worin $R^6$, $R^7$ und $R^8$ die vorgenannte Bedeutung haben,

$R^{11}$ ein Wasserstoffatom, eine Methylgruppe, eine Phenylgruppe oder eine Gruppe

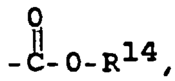

worin $R^{14}$ ein $C_1$-$C_{21}$-Alkylrest ist, und

$R^{12}$ ein Wasserstoffatom oder einen Methylrest bedeuten und

$R^{13}$ ein Wasserstoffatom, eine $C_1$-$C_{30}$-Alkylqruppe, eine $C_2$-$C_{30}$-Alkylengruppe, wobei die Alkylgruppe oder die Alkylengruppe durch Phenyl oder Naphthyl substituiert und/oder durch Sauerstoff oder $C_1$-$C_4$-Alkylimin unterbrochen sein können, eine $C_5$-$C_{12}$-Cycloalkylgruppe, einen Phenylrest, einen $C_1$-$C_{12}$-Alkyl-phenylrest oder einen aliphatischen Kohlenwasserstoffrest mit 2-20 C-Atomen bedeutet, der durch Sauerstoff oder $C_1$-$C_4$-Alkylimin unterbrochen sein kann, und 1-3 weitere Reste der Formel

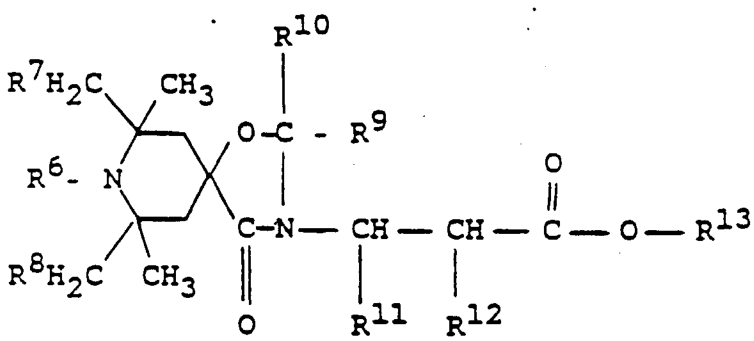

und/oder $C_1$-$C_{21}$-Alkylcarboxylgruppen trägt, wobei $R^6$, $R^7$, $R^8$, $R^9$, $R^{10}$, $R^{11}$ und $R^{12}$ die obige Bedeutung haben, enthält.

**2.** Formmasse nach Anspruch 1, dadurch gekennzeichnet, daß sie zusätzlich 5 bis 95 Gew.-Teile, bezogen auf das Polymer, eines gummimodifizierten poly(alkenyl) aromatischen Harzes, welches wenigstens einige Einheiten der Formel V

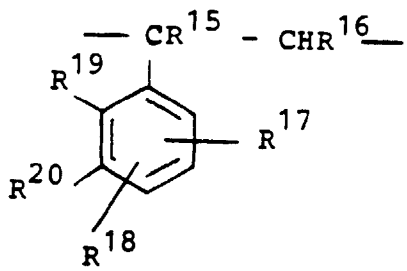

(V)

worin

| | |
|---|---|
| $R^{15}$ und $R^{16}$ | gleich oder verschieden sind und ein Wasserstoffatom, eine $C_1$-$C_6$-Alkylgruppe oder eine $C_2$-$C_6$-Alkenylgruppe, |
| $R^{17}$ und $R^{18}$ | gleich oder verschieden sind und ein Chlor-, Brom- oder Wasserstoffatom oder eine $C_1$-$C_6$-Alkylgruppe, |
| $R^{19}$ und $R^{20}$ | gleich oder verschieden sind und ein Wasserstoffatom, eine $C_1$-$C_6$-Alkylgruppe oder eine $C_2$-$C_6$-Alkenylqruppe bedeuten, oder |
| $R^{19}$ und $R^{20}$ | zusammen mit dem Ring eine Naphthylgruppe bilden, enthält. |

3. Formmasse nach Anspruch 1, dadurch gekennzeichnet, daß sie zusätzlich 0,3 bis 10 Gew.-Teile, bezogen auf das Polymer mindestens einer Verbindung der Formel IV

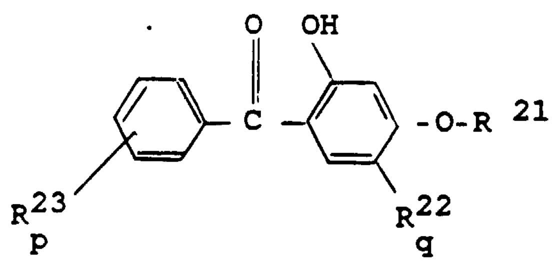

(IV)

worin

| | |
|---|---|
| $R^{21}$ | ein Wasserstoffatom, eine $C_1$-$C_{25}$-Alkylgruppe oder eine $C_6$-$C_{10}$-Arylgruppe, |
| $R^{22}$ und $R^{23}$ | unabhängig voneinander ein Wasserstoffatom, eine Hydroxylgruppe, eine $C_1$-$C_{10}$-Alkoxygruppe, eine $C_1$-$C_{25}$-Alkylgruppe Oder eine $C_6$-$C_{10}$-Arylgruppe bedeuten, und |
| p und q | unabhängig voneinander null oder eine ganze Zahl von 1 bis 5 sind, enthält. |

4. Formmasse nach Anspruch 2, dadurch gekennzeichnet, daß sie zusätzlich 0,3 bis 10 Gew.-Teile, bezogen auf das Polymer mindestens einer Verbindung der Formel IV

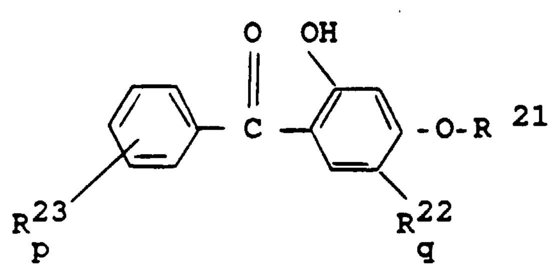

(IV)

worin

| | |
|---|---|
| $R^{21}$ | ein Wasserstoffatom, eine $C_1$-$C_{25}$-Alkylgruppe oder eine $C_6$-$C_{10}$-Arylgruppe, |
| $R^{22}$ und $R^{23}$ | unabhängig voneinander ein Wasserstoffatom, eine Hydroxylgruppe, eine $C_1$-$C_{10}$-Alkoxygruppe, eine $C_1$-$C_{25}$-Alkylgruppe oder eine $C_6$-$C_{10}$-Arylgruppe bedeuten, und |
| p und q | unabhängig voneinander null oder eine ganze Zahl von 1 bis 5 sind, enthält. |

**5.** Formmasse nach Anspruch 1, dadurch gekennzeichnet, daß sie zusätzlich bis zu 30 Gew.-Teile, bezogen auf das Polymer, eines Weichmachers oder eines Schlagzähmachers enthält.

**6.** Formmasse nach Anspruch 2, dadurch gekennzeichnet, daß sie zusätzlich bis zu 30 Gew.-Teile, bezogen auf das Polymer, eines Weichmachers enthält.

**7.** Formmasse nach Anspruch 2, dadurch gekennzeichnet, daß das gummimodifizierte poly(alkenyl)aromatische Harz ein Styroleinheiten enthaltendes Harz ist.

**8.** Formmasse nach Anspruch 2, dadurch gekennzeichnet, daß das gummimodifizierte poly(alkenyl)aromatische Harz ein Styroleinheiten und Butadieneinheiten enthaltendes Harz ist.

## Claims

**1.** A polyphenylene ether molding composition essentially comprising a polymer which contains units of the formula I

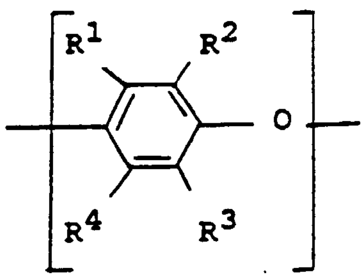

(I)

in which $R^1$, $R^2$, $R^3$ and $R^4$ are identical or different and are hydrogen, halogen, straight-chain or branched $C_1$-$C_{20}$-alkyl, $C_1$-$C_{20}$-alkoxy, phenyl or benzyl, and an antistatic, wherein the molding composition contains from 0.05 to 5 parts by weight, based on the polymer, of at least one compound of the formula II

$$R^5\text{-}[(SO_3)_mM]_n \qquad (II)$$

in which

| | |
|---|---|
| $R^5$ | is a straight-chain or branched, aliphatic hydrocarbon radical having 4 to 30 carbon atoms or a cycloaliphatic hydrocarbon radical having 6 to 30 carbon atoms, |
| M | is an alkali metal or alkaline earth metal atom, |
| m | is 1 or 2, and |
| n | is 1, 2, 3 or 4, where each sulfonate group may be pendant or terminal, |

and
from 0.05 to 2.0 parts by weight, based on the polymer, of at least one compound of the formula III

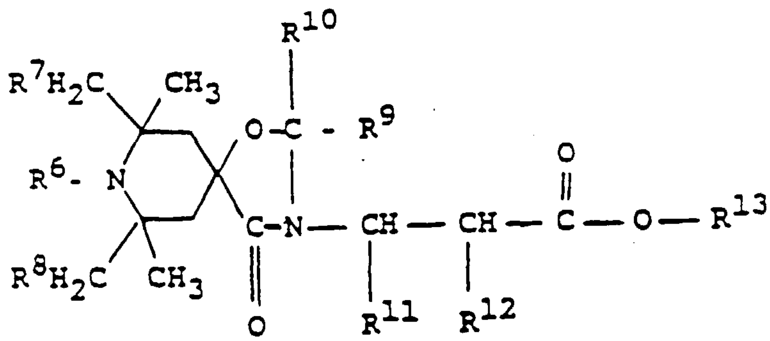

(III)

in which

| | |
|---|---|
| $R^6$ | is hydrogen, $C_1$-$C_8$-alkyl, $C_1$-$C_{18}$-alkoxy, or acyl or hydroxyl, |
| $R^7$ and $R^8$, | independently of one another, are hydrogen or $C_1$-$C_4$-alkyl, |
| $R^9$ | is hydrogen, $C_1$-$C_{30}$-alkyl or benzyl, |
| $R^{10}$ | is hydrogen, $C_1$-$C_{30}$-alkyl, $C_1$-$C_4$-alkylphenyl, chlorophenyl, 4-hydroxy-3,5-di-t-butylphenyl, benzyl, phenyl, or naphthyl, or |
| $R^9$ and $R^{10}$, | together with the carbon atom to which they are bonded, are an optionally $C_1$-$C_4$-alkyl-substituted $C_5$-$C_{15}$-cycloalkylidene ring or a radical of the formula |

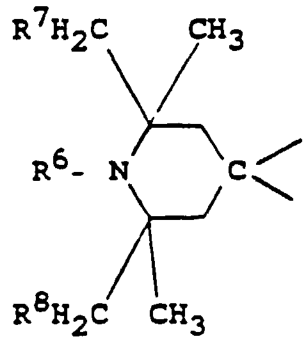

in which $R^6$, $R^7$ and $R^8$ are as defined above,

| | |
|---|---|
| $R^{11}$ | is hydrogen, methyl, phenyl or |

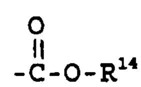

in which $R^{14}$ is $C_1$-$C_{21}$-alkyl, and

| | |
|---|---|
| $R^{12}$ | is hydrogen or methyl, and |
| $R^{13}$ | is hydrogen, $C_1$-$C_{30}$-alkyl, $C_2$-$C_{30}$-alkylene, it being possible for the alkyl group or the alkylene group to be substituted by phenyl or naphthyl and/or to be interrupted by oxygen or $C_1$-$C_4$-alkylimine, or is $C_5$-$C_{12}$-cycloalkyl, phenyl, $C_1$-$C_{12}$-alkylphenyl or an aliphatic hydrocarbon radical having 2 to 20 carbon atoms which may be interrupted by oxygen or $C_1$-$C_4$-alkylimine, and carries 1 to 3 further radicals of the formula |

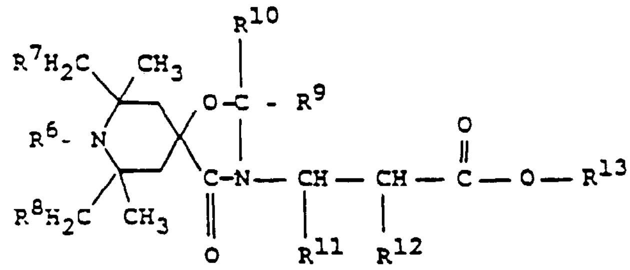

and/or $C_1$-$C_{21}$-alkylcarboxyl groups, where $R^6$, $R^7$, $R^8$, $R^9$, $R^{10}$, $R^{11}$ and $R^{12}$ are as defined above.

2. A molding composition as claimed in claim 1, which additionally contains from 5 to 95 parts by weight, based on the polymer, of a rubber-modified poly(alkenyl)aromatic resin which contains at least some units of the formula V

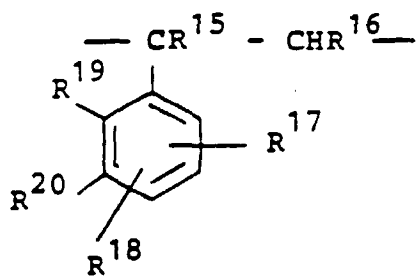

(V)

in which

| | |
|---|---|
| $R^{15}$ and $R^{16}$ | are identical or different and are hydrogen, $C_1$-$C_6$-alkyl or $C_2$-$C_6$-alkenyl, |
| $R^{17}$ and $R^{18}$ | are identical or different and are chlorine, bromine or hydrogen or $C_1$-$C_6$-alkyl, |
| $R^{19}$ and $R^{20}$ | are identical or different and are hydrogen, $C_1$-$C_6$-alkyl or $C_2$-$C_6$-alkenyl, or |
| $R^{19}$ and $R^{20}$ | form a naphthyl group together with the ring. |

3. A molding composition as claimed in claim 1, which additionally contains from 0.3 to 10 parts by weight, based on the polymer, of at least one compound of the formula IV

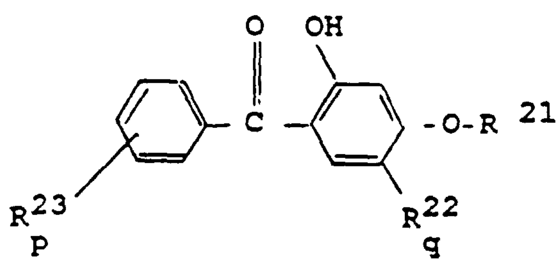

(IV)

in which

| | |
|---|---|
| $R^{21}$ | is hydrogen, $C_1$-$C_{25}$-alkyl or $C_6$-$C_{10}$-aryl, |
| $R^{22}$ and $R^{23}$, | independently of one another, are hydrogen, hydroxyl, $C_1$-$C_{10}$-alkoxy, $C_1$-$C_{25}$-alkyl or $C_6$-$C_{10}$-aryl, and |
| p and q, | independently of one another, are zero or an integer from 1 to 5. |

4. A molding composition as claimed in claim 2, which additionally contains from 0.3 to 10 parts by weight, based on the polymer, of at least one compound of the formula IV

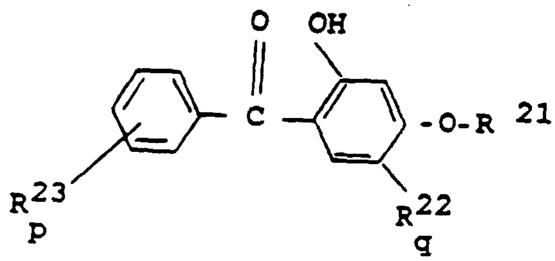

(IV)

in which

| | |
|---|---|
| $R^{21}$ | is hydrogen, $C_1$-$C_{25}$-alkyl or $C_6$-$C_{10}$-aryl, |
| $R^{22}$ and $R^{23}$, | independently of one another, are hydrogen, hydroxyl, $C_1$-$C_{10}$-alkoxy, $C_1$-$C_{25}$-alkyl or $C_6$-$C_{10}$-aryl, and |
| p and q, | independently of one another, are zero or an integer from 1 to 5. |

**5.** A molding composition as claimed in claim 1, which additionally contains up to 30 parts by weight, based on the polymer, of a plasticizer or impact modifier.

**6.** A molding composition as claimed in claim 2, which additionally contains up to 30 parts by weight, based on the polymer, of a plasticizer.

**7.** A molding composition as claimed in claim 2, wherein the rubber-modified poly(alkenyl)aromatic resin is a resin containing styrene units.

**8.** A molding composition as claimed in claim 2, wherein the rubber-modified poly(alkenyl)aromatic resin is a resin containing styrene units and butadiene units.

**Revendications**

**1.** Mélange à mouler de poly(oxyphénylène), constitué essentiellement d'un polymère qui contient des motifs de formule I

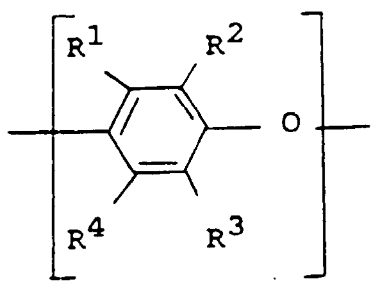

(I),

dans laquelle $R^1$, $R^2$, $R^3$ et $R^4$ sont identiques ou différents et représentent chacun un atome d'hydrogène, un atome d'halogène, un radical alkyle en $C_1$-$C_{20}$ à chaîne droite ou ramifiée, un radical alcoxy en $C_1$-$C_{20}$, un radical phényle ou benzyle, ainsi que d'un antistatique, caractérisé en ce que le mélange à mouler contient de 0,05 à 5 % en parties en poids, par rapport au polymère, d'au moins un composé de formule II

$$R^5\text{-}[(SO_3)_mM]_n \qquad \text{(II)}$$

dans laquelle $R^5$ est un radical hydrocarboné aliphatique à chaîne droite ou ramifiée ayant de 4 à 30 atomes de

carbone ou un radical hydrocarboné cycloaliphatique ayant de 6 à 30 atomes de carbone,

M est un atome d'un métal alcalin ou alcalino-terreux,
m vaut 1 ou 2, et
n vaut 1, 2, 3 ou 4, auquel cas chaque groupe sulfonate peut être en position centrale ou terminale, et
de 0,05 à 2,0 parties en poids, par rapport au polymère, d'au moins un composé de formule III

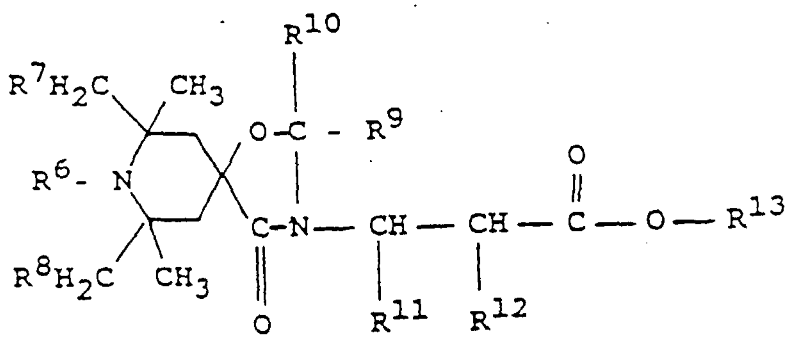

(III)

dans laquelle

R6 est un atome d'hydrogène, un groupe alkyle en $C_1$-$C_8$, un groupe alcoxy en $C_1$-$C_{18}$ ou un groupe acyle ou hydroxyle,
$R^7$ et $R^8$, indépendamment l'un de l'autre, sont chacun un atome d'hydrogène ou un groupe alkyle en $C_1$-$C_4$,
$R^9$ est un atome d'hydrogène, un groupe alkyle en $C_1$-$C_{30}$ ou un groupe benzyle,
$R^{10}$ est un atome d'hydrogène, un groupe alkyle, en $C_1$-$C_{30}$, un groupe (alkyle en $C_1$-$C_4$)phényie, un groupe chlorophényle, un groupe 4-hydroxy-3,5-di-tert-butylphényle, un groupe phényle, benzyle ou naphtyle, ou encore,
$R^9$ et $R^{10}$, avec l'atome de carbone auquel ils sont liés, forment un noyau cycloalkylidène en $C_5$-$C_{15}$ éventuellement substitué par des substituants alkyle en $C_1$-$C_4$, ou encore un radical de formule

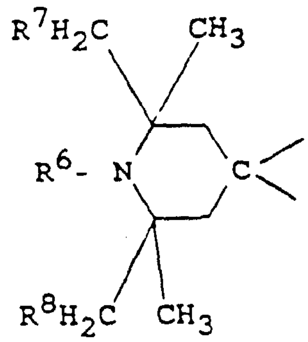

dans laquelle $R^6$, $R^7$ et $R^8$ ont les significations données ci-dessus,

$R^{11}$ est un atome d'hydrogène, un groupe méthyle, un groupe phényle ou un groupe

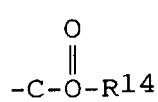

dans laquelle R14 est un radical alkyle en $C_1$-$C_{21}$, et
$R^{12}$ est un atome d'hydrogène ou un radical méthyle, et

$R^{13}$ est un atome d'hydrogène, un groupe alkyle en $C_1$-$C_{30}$, un groupe alkylène en $C_2$-$C_{30}$, auquel cas le groupe alkyle ou le groupe alkylène peuvent être substitués par des substituants phényle ou naphtyle et/ou interrompus par de l'oxygène ou un groupe alkylimine en $C_1$-$C_4$, un groupe cycloalkyle en $C_5$-$C_{12}$, un groupe phényle, un radical (alkyle en $C_1$-$C_{12}$)Phényle, ou un radical hydrocarboné aliphatique ayant de 2 à 20 atomes de carbone, qui peut être interrompu par un oxygène ou un groupe alkylimine en $C_1$-$C_4$, et porte 1-3 autres radicaux de formule

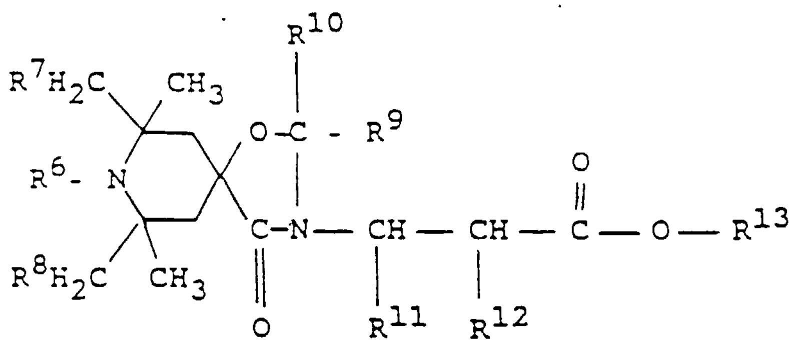

et/ou des groupes (alkyle en $C_1$-$C_{21}$)carboxyle, auquel cas $R^6$, $R^7$, $R^8$, $R^9$, $R^{10}$, $R^{11}$ et $R^{12}$ ont les significations ci-dessus.

**2.** Mélange à mouler selon la revendication 1, caractérisé en ce qu'il contient en outre de 5 à 95 parties en poids, par rapport au polymère, d'une résine poly(alcényl)aromatique modifiée par du caoutchouc, qui contient au moins quelques motifs de formule V

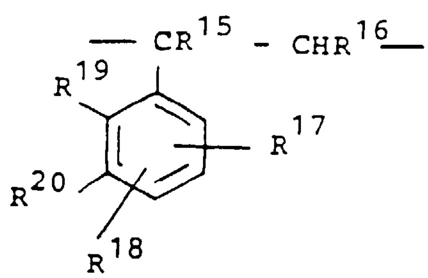

(V)

dans laquelle

$R^{15}$ et $R^{16}$ sont identiques ou différents et représentent chacun un atome d'hydrogène, un groupe alkyle en $C_1$-$C_6$ ou un groupe alcényle en $C_2$-$C_6$,
$R^{17}$ et $R^{18}$ sont identiques ou différents et représentent chacun un atome de chlore, de brome ou d'hydrogène, ou un groupe alkyle en $C_1$-$C_6$,
$R^{19}$ et $R^{20}$ sont identiques ou différents et représentent chacun un atome d'hydrogène, un groupe alkyle en $C_1$-$C_6$ ou un groupe alcényle en $C_2$-$C_6$, ou bien
$R^{19}$ et $R^{20}$, avec le noyau, forment un groupe naphtyle.

**3.** Mélange à mouler selon la revendication 1, caractérisé en ce qu'il contient en outre de 0,3 à 10 parties en poids, par rapport au polymère, d'au moins un composé de formule IV

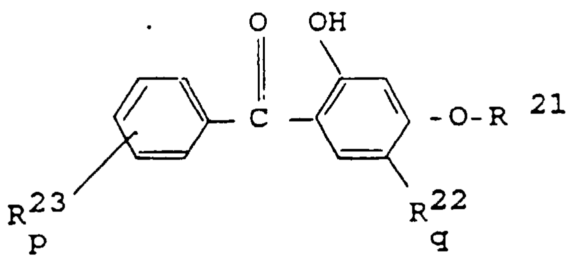

(IV)

dans laquelle

$R^{21}$ est un atome d'hydrogène, un groupe alkyle en $C_1$-$C_{25}$ ou un groupe aryle en $C_6$-$C_{10}$,
$R^{22}$ et $R^{23}$, indépendamment l'un de l'autre, sont chacun un atome d'hydrogène, un groupe hydroxyle, un groupe alcoxy en $C_1$-$C_{10}$, un groupe alkyle en $C_1$-$C_{25}$ ou un groupe aryle en $C_6$-$C_{10}$,
p et q, indépendamment l'un de l'autre, valent chacun zéro ou un nombre entier de 1 à 5.

**4.** Mélange à mouler selon la revendication 2, caractérisé en ce qu'il contient en outre de 0,3 à 10 parties en poids, par rapport au polymère, d'au moins un composé de formule IV

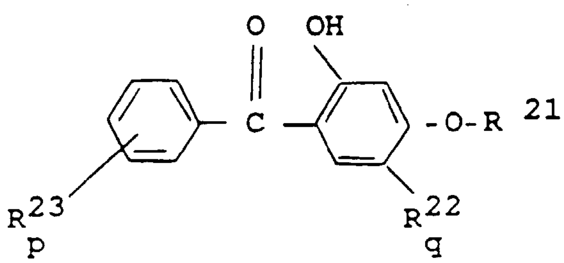

(IV)

dans laquelle

$R^{21}$ est un atome d'hydrogène, un groupe alkyle en $C_1$-$C_{25}$ ou un groupe aryle en $C_6$-$C_{10}$,
$R^{22}$ et $R^{23}$, indépendamment l'un de l'autre, sont chacun un atome d'hydrogène, un groupe hydroxyle, un groupe alcoxy en $C_1$-$C_{10}$, un groupe alkyle en $C_1$-$C_{25}$ ou un groupe aryle en $C_6$-$C_{10}$,
p et q, indépendamment l'un de l'autre, valent chacun zéro ou un nombre entier de 1 à 5.

**5.** Mélange à mouler selon la revendication 1, caractérisé en ce qu'il contient en outre jusqu'à 30 parties en poids, par rapport au polymère, d'un plastifiant ou d'un modifiant choc.

**6.** Mélange à mouler selon la revendication 2, caractérisé en ce qu'il contient en outre jusqu'à 30 parties en poids, par rapport au polymère, d'un plastifiant.

**7.** Mélange à mouler selon la revendication 2, caractérisé en ce que la résine poly(alcényl)aromatique modifiée par du caoutchouc est une résine contenant des motifs styrène.

**8.** Mélange à mouler selon la revendication 2, caractérisé en ce que la résine poly(alcényl)aromatique modifiée par du caoutchouc est une résine contenant des motifs styrène et des motifs butadiène.